# EUROPÄISCHE PATENTSCHRIFT

(11) **EP 3 345 703 B1**
(45) Veröffentlichungstag und Bekanntmachung des Hinweises auf die Patenterteilung: **07.04.2021**
(21) Anmeldenummer: 17150784.1
(22) Anmeldetag: 10.01.2017
(51) Int. Cl.: B23B 31/107, B23B 31/24

(54) **ANORDNUNG AUS WERKZEUGMASCHINE UND EINSPANNHALTER EINES WERKSTÜCKS SOWIE SPANNFUTTER HIERFÜR**
ASSEMBLY OF MACHINE TOOL AND TENSION HOLDER OF A WORKPIECE AND CHUCK FOR SAME
ENSEMBLE COMPRENANT UNE MACHINE-OUTIL ET PORTE-MANDRIN D'UNE PIÈCE ET MANDRIN DE SERRAGE ASSOCIÉ

(43) Veröffentlichungstag der Anmeldung: 11.07.2018
(73) Patentinhaber: Huber, Martin, 5452 Pfarrwerfen (AT); Wörmer, Alfons, 5500 Bischofshofen (AT)
(72) Erfinder: HUBER, Martin, 5452 Pfarrwerfen (AT); WÖRMER, Alfons, 5500 Bischofshofen (AT)
(74) Vertreter: Splanemann

(56) Entgegenhaltungen:
- EP-A1- 0 827 806
- EP-A1- 1 707 307
- EP-A1- 1 952 922
- US-A- 4 762 447

## Beschreibung

Die Erfindung betrifft eine Anordnung aus einer Werkzeugmaschine und einen mit einem Werkstück verbundenen Werkstückhalter Eine solche Anordnung ist beispielsweise aus der EP 1 952 922 A1 bekannt.

### Stand der Technik

Werkzeugmaschinen weisen herkömmlicherweise einen mit einem Spannfutter ausgebildeten Mehrachsen-Werkstückarm auf, wobei das Spannfutter derart ausgebildet ist, dass das zu fixierende Teil zwischen einer Mehrzahl von Spannbacken festgeklemmt wird. Im Inneren des Spannfutters ist in der Regel eine Schraube angeordnet, die beim Zudrehen jeweilige Spannbacken in einen Kegel schiebt und dadurch das Werkzeug spannt.

Die DE 1 259 177 B1 offenbart eine Werkzeugmaschine mit vertikal am Maschinenständer geführter Konsole, mit einer am auskragenden Ende der Konsole angreifenden Vorrichtung zur Entlastung der Vertikalführungen von Kippmomenten der Konsole und zur Erzeugung einer dem Gewicht der Konsole entgegenwirkenden Kraft zur Erleichterung der Konsolenverstellung, wobei die dem Gewicht der Konsole entgegenwirkende Kraft, wie bei Gewichtsentlastungsvorrichtungen für Konsolen bekannt, die Rückstellkraft einer Feder ist, welche auf den kürzeren Hebelarm eines im Bereich des Schnittpunktes der Aufstellfläche des Maschinenständers mit den Vertikalführungen drehbar gelagerten zweiarmigen Hebels einwirkt, dessen längerer Hebelarm an einem Gleitschuh angelenkt ist, der in horizontalen Führungen an der Konsole gleitbar und feststellbar geführt ist, wobei eine Feststellvorrichtung als ein über ein Handrad verstellbarer Klemmkeil ausgebildet und diesem an den horizontalen Führungen eine entsprechend ausgebildete Anschlagfläche zugeordnet ist.

Der Erfindung liegt somit die Aufgabe zugrunde, eine verbesserte Anordnung aus einer Werkzeugmaschine und einem mit einem Werkstück verbundenen Werkstückhalter bereitzustellen, welche kompakte Abmessungen aufweist, einen sicheren Halt bietet und ein schnelles Öffnen und Schließen einer Spanneinrichtung zum Einspannen und Freigeben des Werkstückhalters ermöglicht.

Die Aufgabe wird mit einer Anordnung mit den Merkmalen des Patentanspruchs 1 gelöst.

### Offenbarung der Erfindung

Die vorliegende Erfindung schafft eine Anordnung aus einer Werkzeugmaschine und einem mit einem Werkstück verbundenen Werkstückhalter, mit einem Mehrachsen-Werkstückarm der Werkzeugmaschine, der ein Spannfutter aufweist, welches an oder in dem Mehrachsen-Werkstückarm gelagert ist, insbesondere um eine Drehachse drehbar gelagert ist, mit welchem Spannfutter der Werkstückhalter des Werkstücks einspannbar ist, wobei der Werkstückhalter zumindest eine radial nach außen weisende Fläche, insbesondere eine im Wesentlichen plane Fläche, aufweist, welche für eine Anlage an einem in Radialrichtung zwischen dem Werkstückhalter und dem Spannfutter angeordneten Spannelement des Mehrachsen-Werkstückarms ausgebildet ist, wobei das Spannelement zum Einspannen und Lösen des Werkstückhalters relativ zum Spannfutter verschiebbar ist, wobei das Spannelement dazu ausgebildet ist, bei einem Verschieben relativ zum Spannfutter eine auf dem Werkstückhalter aufgebrachte Klemmkraft zu variieren.

Eine Idee der vorliegenden Erfindung ist es, durch Vorsehen des relativ zum Spannfutter verschiebbar angeordneten Spannelements in konstruktiv einfacher Weise eine Klemmkraft auf den Werkstückhalter aufzubringen bzw. von diesem zu lösen sowie dass aufgrund der flächigen Anlage zwischen Spannfutter, Spannelement und Werkstückhalter eine hohe Klemmkraft auf den Werkstückhalter aufbringbar ist.

Vorteilhafte Ausführungsformen und Weiterbildungen ergeben sich aus den Unteransprüchen sowie aus der Beschreibung unter Bezugnahme auf die Figuren.

Gemäß einer weiteren bevorzugten Weiterbildung ist vorgesehen, dass das Spannelement und/oder das Spannfutter eine derartige Geometrie aufweisen, dass das Spannelement dazu ausgebildet ist, bei dem Verschieben relativ zum Spannfutter in eine erste Richtung auf den Werkstückhalter eine Klemmkraft aufzubringen und bei dem Verschieben relativ zum Spannfutter in eine zweite Richtung die auf den Werkstückhalter aufgebrachte Klemmkraft abzubauen. Somit kann lediglich durch Verschieben des Spannelements in Kombination mit der geometrischen Ausbildung von Spannelement und Spannfutter die Klemmkraft auf den Werkstückhalter aufgebracht bzw. abgebaut werden.

Gemäß einer weiteren bevorzugten Weiterbildung ist vorgesehen, dass das Spannelement zum Einspannen des Werkstückhalters in das Spannfutter und zum Lösen des Werkstückhalters aus dem Spannfutter in einer Richtung parallel zu einer Erstreckungsrichtung der Fläche oder parallel zur Drehachse verschiebbar ist. Somit können das Spannfutter und das Spannelement in vorteilhafter Weise optimal auf deren jeweilige Geometrie aufeinander angepasst werden und den Werkstückhalter in zuverlässiger Art und Weise einspannen.

Gemäß der Erfindung ist vorgesehen, dass das Spannfutter hohl ausgebildet ist, wobei eine Innenoberfläche des Spannfutters und das Spannelement im Querschnitt zumindest abschnittsweise keilförmig ausgebildet sind, wobei bei dem Verschieben des Spannelements relativ zum Spannfutter in die erste Richtung zueinander benachbart angeordnete, keilförmig ausgebildete Flächen des Spannfutters und des Spannelements derart in Anlage sind, dass das Spannelement den Werkstückhalter im Spannfutter einspannt. Die jeweils keilförmig ausgebildeten Flächen des Spannfutters und des Spannelements sind somit derart aufeinander abgestimmt, dass diese bei Verschieben des Spannelements zum Einspannen des Werkstückhalters aufeinander einwirken.

Gemäß einer weiteren bevorzugten Weiterbildung ist vorgesehen, dass bei dem Verschieben des Spannelements relativ zum Spannfutter in die zweite Richtung die zueinander benachbart angeordneten, keilförmig ausgebildeten Flächen des Spannfutters und des Spannelements derart aus der Anlage bewegbar sind, dass das Spannelement den Werkstückhalter aus dem Spannfutter löst. Die jeweils keilförmig ausgebildeten Flächen des Spannfutters und des Spannelements sind somit derart aufeinander abgestimmt, dass diese bei Verschieben des Spannelements zum Lösen des Werkstückhalters aufeinander einwirken.

Gemäß einer weiteren bevorzugten Weiterbildung ist vorgesehen, dass die erste Richtung zu einem offenen Ende des Spannfutters und die zweite Richtung zu einem geschlossenen Ende des Spannfutters gerichtet ist. Somit ist es möglich, dass jeweilige Komponenten, welche das Bewegen des Spannelements bewirken, in vorteilhafter Weise im Inneren des Mehrachsen-Werkstückarms anordbar sind.

Gemäß einer weiteren bevorzugten Weiterbildung ist vorgesehen, dass das Spannelement mit einem über eine Tellerfeder betätigbaren Spannbolzen verbunden oder integral ausgebildet ist, wobei das Spannfutter mit dem Spannelement derart zusammenwirkt, dass bei Betätigen der Tellerfeder der Spannbolzen das Spannelement in Richtung eines Gehäuseinnenraums des Mehrachsen-Werkstückarms bewegt, wodurch das Einspannen des Werkstückhalters in einem Gehäuse des Mehrachsen-Werkstückarms bewirkbar ist. Somit kann ein sicheres Befestigen des Werkstückhalters in dem Spannfutter ermöglicht werden, wobei der Werkstückhalter ohne Einbringen einer entgegen einer Federkraft der Tellerfeder wirkenden Kraft in vorteilhafter Weise nicht wieder aus dem eingespannten Zustand lösbar ist.

Gemäß einer weiteren bevorzugten Weiterbildung ist vorgesehen, dass durch Betätigen zumindest eines in einer Zylinderdose gelagerten Kolbens des Mehrachsen-Werkstückarms Druckluft gegen eine Federpaketschraube einbringbar ist. Somit kann ein präzises gesteuertes Betätigen des Spannbolzens ermöglicht werden. Gemäß einer weiteren bevorzugten Weiterbildung ist vorgesehen, dass durch das Einbringen der Druckluft gegen die Federpaketschraube ein axiales Verschieben des Spannbolzens zum Lösen des in dem Gehäuse des Mehrachsen-Werkstückarms eingespannten Werkstückhalters bewirkbar ist. Somit kann der Werkstückhalter wieder zuverlässig aus dem eingespannten Zustand gelöst werden.

Gemäß einer weiteren bevorzugten Weiterbildung ist vorgesehen, dass das Spannelement durch eine Spannzunge ausgebildet ist, welche zumindest abschnittsweise an dem Spannfutter und dem Werkstückhalter anliegt, und wobei das Spannelement an einer dem Werkstückhalter zugewandten Seite eine im Wesentlichen plan ausgebildete Fläche aufweist. Somit besteht in vorteilhafter Weise eine flächige Anlage des Spannelements sowohl am Spannfutter als auch am Werkstückhalter.

Besonders günstig ist es, wenn der erfindungsgemäße Mehrachsen-Werkstückarm alle Bewegungsachsen der Werkzeugmaschine abdeckt, also z.B. 5 Achsen bei einer 5-Achs-Maschine, so dass die Spindel mit dem Werkzeug feststehend realisiert sein kann.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnung

Die beiliegende Zeichnung soll ein weiteres Verständnis der Ausführungsform der Erfindung vermitteln. Sie veranschaulicht die Ausführungsform und dient im Zusammenhang mit der Beschreibung der Erklärung von Prinzipien und Konzepten der Erfindung.

Andere Ausführungsformen und viele der genannten Vorteile ergeben sich im Hinblick auf die Zeichnung. Die dargestellten Elemente der Zeichnungen sind nicht notwendigerweise maßstabsgetreu zueinander gezeigt.

Es zeigt:

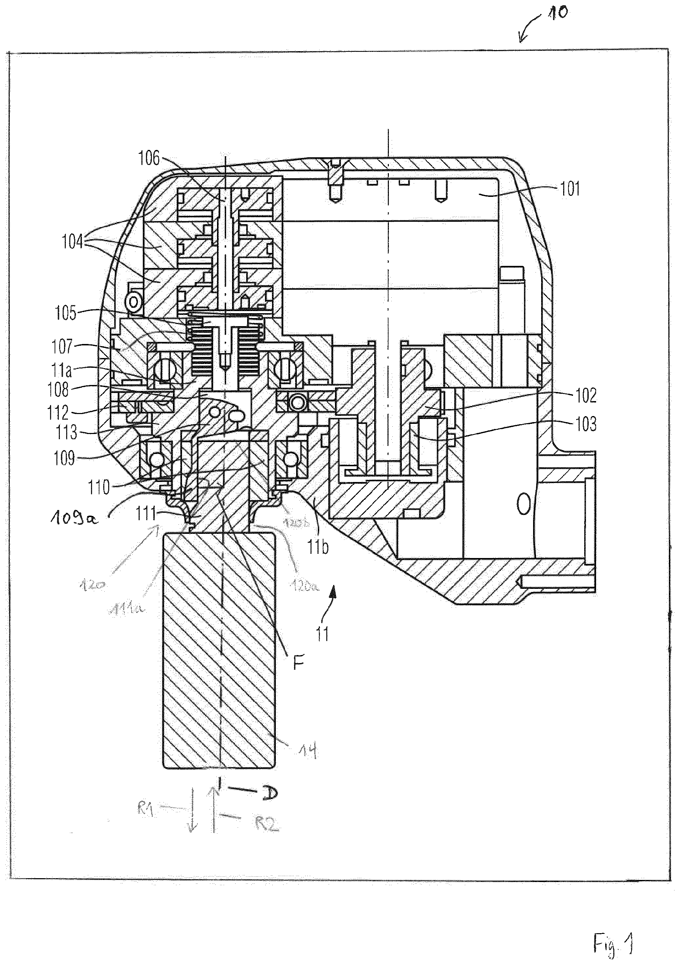

- Fig. 1: eine Querschnittsansicht einer Anordnung aus einer Werkzeugmaschine und einem mit einem Werkstück verbundenen Werkstückhalter gemäß einer bevorzugten Ausführungsform der Erfindung.

Die Anordnung aus der Werkzeugmaschine 10 und dem mit dem Werkstück 14 verbundenen Werkstückhalter 111 weist einen Mehrachsen-Werkstückarm 11 der Werkzeugmaschine 10 auf, der ein Spannfutter 120 aufweist, welches in dem Mehrachsen-Werkstückarm 11 gelagert ist. Alternativ kann das Spannfutter 120 beispielsweise an dem Mehrachsen-Werkstückarm 11 gelagert sein. Das Spannfutter ist um eine Drehachse D drehbar gelagert. Der Werkstückhalter 111 ist in das Spannfutter 120 einspannbar. Der Werkstückhalter 111 weist eine radial nach außen weisende Fläche 111a auf. Die radial nach außen weisende Fläche 111a ist als plane Fläche ausgebildet.

Der Werkstückhalter 111 ist von einem Einsatz 110 des Spannfutters 120 umgeben. An diesem liegt der Halter 111 teilweise direkt und teilweise indirekt an.

Die radial nach außen weisende Fläche 111a ist für eine Anlage an einem in Radialrichtung zwischen dem Werkstückhalter 111 und dem Spannfutter 120 angeordneten Spannelement 109 des Mehrachsen-Werkstückarms 11 ausgebildet. Das Spannelement 109 ist zum Einspannen und Lösen des Werkstückhalters 111 relativ zum Spannfutter 120 verschiebbar, wobei das Spannelement 109 dazu ausgebildet ist, bei einem Verschieben relativ zum Spannfutter 120 eine auf den Werkstückhalter 111 aufgebrachte Klemmkraft F zu variieren.

Das Spannelement 109 und das Spannfutter 120 weisen vorzugsweise eine derartige Geometrie auf, dass das Spannelement 109 dazu ausgebildet ist, bei dem Verschieben relativ zum Spannfutter 120 in eine erste Richtung R1 auf den Werkstückhalter 111 eine Klemmkraft F aufzubringen und bei dem Verschieben relativ zum Spannfutter 120 in eine zweite Richtung R2 die auf den Werkstückhalter 111 aufgebrachte Klemmkraft F abzubauen. Alternativ kann beispielsweise das Spannelement 109 oder das Spannfutter 120 eine spezielle Geometrie aufweisen, welche das Einspannen bzw. Lösen des Werkstückhalters in das bzw. aus dem Spannfutter ermöglicht.

Das Spannelement 109 ist zum Einspannen des Werkstückhalters 111 in das Spannfutter 120 und zum Lösen des Werkstückhalters 111 aus dem Spannfutter 120 in einer Richtung parallel zu einer Erstreckungsrichtung der Fläche verschiebbar angeordnet. Alternativ kann das Spannelement 109 zum Einspannen des Werkstückhalters 111 in das Spannfutter 120 und zum Lösen des Werkstückhalters 111 aus dem Spannfutter 120 beispielsweise in einer Richtung parallel zur Drehachse D verschiebbar angeordnet sein.

Das Spannfutter 120 ist hohl ausgebildet. Eine Innenoberfläche des Spannfutters 120 und das Spannelement 109 sind im Querschnitt zumindest abschnittsweise keilförmig ausgebildet. Bei dem Verschieben des Spannelements 109 relativ zum Spannfutter 120 in die erste Richtung R1 sind zueinander benachbart angeordnete, keilförmig ausgebildete Flächen des Spannfutters 120 und des Spannelements 109 derart in Anlage, dass das Spannelement 109 den Werkstückhalter 111 im Spannfutter 120 einspannt. Bei dem Verschieben des Spannelements 109 relativ zum Spannfutter 120 in die zweite Richtung R2 sind die zueinander benachbart angeordneten, keilförmig ausgebildeten Flächen des Spannfutters 120 und des Spannelements 109 derart aus der Anlage bewegbar, dass das Spannelement 109 den Werkstückhalter 111 aus dem Spannfutter 120 löst.

Die erste Richtung R1 ist vorzugsweise zu einem offenen Ende 120a des Spannfutters 120 und die zweite Richtung R2 zu einem geschlossenen Ende 120b des Spannfutters 120 gerichtet. Alternativ kann beispielsweise eine entgegengesetzte Ausrichtung realisiert werden.

Das Spannelement 109 ist vorzugsweise mit einem über eine Tellerfeder betätigbaren Spannbolzen 108 fest verbunden. Alternativ kann das Spannelement 109 beispielsweise mit dem über die Tellerfeder betätigbaren Spannbolzen integral ausgebildet sein. Das Spannfutter 120 wirkt mit dem Spannelement 109 derart zusammen, dass bei Betätigen der Tellerfeder 107 der Spannbolzen 108 das Spannelement 109 in Richtung eines Gehäuseinnenraums 11a des Mehrachsen-Werkstückarms 11 bewegt, wodurch das Einspannen des Werkstückhalters 111 in einem Gehäuse 11b des Mehrachsen-Werkstückarms 11 bewirkbar ist.

Durch Betätigen zumindest eines in einer Zylinderdose 104 gelagerten Kolbens 106 des Mehrachsen-Werkstückarms 11 ist Druckluft gegen eine Federpaketschraube 105 einbringbar. Durch das Einbringen der Druckluft gegen die Federpaketschraube 105 ist ein axiales Verschieben des Spannbolzens 108 zum Lösen des im Gehäuse 11b des Mehrachsen-Werkstückarms 11 eingespannten Werkstückhalters 111 bewirkbar.

Das Spannelement 109 ist vorzugsweise durch eine Spannzunge 109a ausgebildet. Die Spannzunge 109a ist zumindest abschnittsweise an dem Spannfutter 120 und dem Werkstückhalter 111 anliegend angeordnet. Das Spannelement 109 weist an einer dem Werkstückhalter 111 zugewandten Seite eine im Wesentlichen plan ausgebildete Fläche auf. Die Spannzunge 109a und der Einsatz 110 weisen einander zugewandt Keilflächen auf. Der Keilwinkel beträgt hier etwa 10 Grad, kann aber zur Erhöhung der Klemmwirkung z.B. auf 5 Grad reduziert werden.

Ein in dem Gehäuse des Mehrachsen-Werkstückarms 11 angeordneter Elektromotor 101 treibt ein Stirnrad 102 an, welches ein erzeugtes Moment über ein weiteres Stirnrad 112 an eine Welle 113 überträgt. Dies führt zu einer Drehbewegung des Werkstückhalters 111. Die Drehbewegung des Stirnrads 102 wird über einen Drehgeber 103 erfasst, dessen Ausgangssignal als Regelgröße für die Drehbewegung verwendet wird.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise kann der Halter 111 einen rechteckigen oder quadratischen Querschnitt aufweisen. Bevorzugt ist jedoch ein nichtrotationssymmetrischer polyedrischen Querschnitt, wobei eine plane Seitenfläche 111a und die dieser gegenüberliegende Fläche sich bevorzugt über maximale Erstreckung des Halters 111 in Richtung der betreffenden Fläche erstrecken, so dass eine vergleichsweise geringe Flächenpressung vorliegt.

In einer alternativen Ausgestaltung können die Flächen mindestens teilweise aber auch ballig oder gerundet sein, wobei dann die hieran anliegenden Flächen der Spannzange und des Einsatzes 110 hieran angepasst profiliert sind.

Beispielsweise können eine Dimensionierung bzw. geometrische Ausbildung des Spannfutters, des Spannelements und/oder des Werkstückhalters an jeweilige bauliche Anforderungen des Werkstück-Wechselarms angepasst werden.

## Patentansprüche

1. Anordnung aus einer Werkzeugmaschine (10) und einem mit einem Werkstück (14) verbundenen Werkstückhalter (111), wobei der Werkstückhalter (111) zumindest eine radial nach außen weisende Flache (111a) aufweist, welche für eine Anlage an einem in Radialrichtung zwischen dem Werkstückhalter (111) und einem Spannfutter (120) angeordneten Spannelements (109) ausgebildet ist, wobei eine Innenoberfläche des Spannfutters (120) und das Spannelement (109) im Querschnitt zumindest abschnittsweise keilförmig ausgebildet sind, **dadurch gekennzeichnet, dass** die Fläche (111a) eine im Wesentlichen plane Fläche ist, und dass Mehrachsen-Werkstückarm (11) der Werkzeugmaschine (10) das Spannfutter (120) aufweist, welches an oder in dem Mehrachsen-Werkstückarm (11) gelagert ist, insbesondere um eine Drehachse (D) drehbar gelagert ist, mit welchem Spannfutter (120) der Werkstückhalter (111) des Werkstücks (14) einspannbar ist, und dass die Innenoberfläche des Spannfutters (120) und das Spannelement (109) derart aufeinander abgestimmt sind, dass diese beim Verschieben des Spannelements (109) relativ zum Spannfutter (120) parallel zur Drehachse zum Einspannen und Lösen des Werkstückhalters (111) aus dem Spannfutter (120) aufeinander einwirken, wobei das Spannelement (109) dazu ausgebildet ist, bei einem Verschieben relativ zum Spannfutter (120) eine auf den Werkstückhalter (111) aufgebrachte Klemmkraft (F) zu variieren.

2. Anordnung nach Anspruch 1, **dadurch gekennzeichnet, dass** das Spannelement (109) und/oder das Spannfutter (120) eine derartige Geometrie aufweisen, dass das Spannelement (109) dazu ausgebildet ist, bei dem Verschieben relativ zum Spannfutter (120) in eine erste Richtung (R1) auf den Werkstückhalter (111) eine Klemmkraft (F) aufzubringen und bei dem Verschieben relativ zum Spannfutter (120) in eine zweite Richtung (R2) die auf den Werkstückhalter (111) aufgebrachte Klemmkraft (F) abzubauen.

3. Anordnung nach Anspruch 1 oder 2, **dadurch gekennzeichnet, dass** das Spannelement (109) zum Einspannen des Werkstückhalters (111) in das Spannfutter (120) und zum Lösen des Werkstückhalters (111) aus dem Spannfutter (120) in einer Richtung parallel zu einer Erstreckungsrichtung der Fläche oder parallel zur Drehachse (D) verschiebbar ist.

4. Anordnung nach einem der vorhergehenden Ansprüche, **dadurch gekennzeichnet, dass** das Spannfutter (120) hohl ausgebildet ist, und dass bei dem Verschieben des Spannelements (109) relativ zum Spannfutter (120) in die erste Richtung (R1) die zueinander benachbart angeordneten, keilförmig ausgebildeten Flächen des Spannfutters (120) und des Spannelements (109) derart in Anlage sind, dass das Spannelement (109) den Werkstückhalter (111) im Spannfutter (120) einspannt.

5. Anordnung nach Anspruch 4, **dadurch gekennzeichnet, dass** bei dem Verschieben des Spannelements (109) relativ zum Spannfutter (120) in die zweite Richtung (R2) die zueinander benachbart angeordneten, keilförmig ausgebildeten Flächen des Spannfutters (120) und des Spannelements (109) derart aus der Anlage bewegbar sind, dass das Spannelement (109) den Werkstückhalter (111) aus dem Spannfutter (120) löst.

6. Anordnung nach einem der vorhergehenden Ansprüche, **dadurch gekennzeichnet, dass** die erste Richtung (R1) zu einem offenen Ende (120a) des Spannfutters (120) und die zweite Richtung (R2) zu einem geschlossenen Ende (120b) des Spannfutters (120) gerichtet ist.

7. Anordnung nach einem der vorhergehenden Ansprüche, **dadurch gekennzeichnet, dass** das Spannelement (109) mit einem über eine Tellerfeder (107) betätigbaren Spannbolzen (108) verbunden oder integral ausgebildet ist, wobei das Spannfutter (120) mit dem Spannelement (109) derart zusammenwirkt, dass bei Betätigen der Tellerfeder (107) der Spannbolzen (108) das Spannelement (109) in Richtung eines Gehäuseinnenraums (11a) des Mehrachsen-Werkstückarms (11) bewegt, wodurch das Einspannen des Werkstückhalters (111) in einem Gehäuse (11b) des Mehrachsen-Werkstückarms (11) bewirkbar ist.

8. Anordnung nach einem der vorhergehenden Ansprüche, **dadurch gekennzeichnet, dass** durch Betätigen zumindest eines in einer Zylinderdose (104) gelagerten Kolbens (106) des Mehrachsen-Werkstückarms (11) Druckluft gegen eine Federpaketschraube (105) einbringbar ist.

9. Anordnung nach Anspruch 8, **dadurch gekennzeichnet, dass** durch das Einbringen der Druckluft gegen die Federpaketschraube (105) ein axiales Verschieben des Spannbolzens (108) zum Lösen des in dem Gehäuse (11b) des Mehrachsen-Werkstückarms (11) eingespannten Werkstückhalters (111) bewirkbar ist.

10. Anordnung nach einem der vorhergehenden Ansprüche, **dadurch gekennzeichnet, dass** das Spannelement (109) durch eine Spannzunge ausgebildet ist, welche zumindest abschnittsweise an dem Spannfutter (120) und dem Werkstückhalter (111) anliegt, und wobei das Spannelement (109) an einer dem Werkstückhalter (111) zugewandten Seite eine im Wesentlichen plan ausgebildete Fläche aufweist.

## Claims

1. An assembly comprising a machine tool (10) and a workpiece holder (111) associated to a workpiece (14), the workpiece holder (111)comprising at least one surface (111a) facing radially outwards which is configured to bear against a clamping element (109) arranged in the radial direction between the workpiece halder(111) and a chuck (120), wherein an inner surface of the chuck (120) and the clamping element (109) are at least sectionally of a wedge-shaped cross-section, **characterized in that** the surface (111a) is a substantially planar surface, and that the multi-axis workpiece arm (11) of the machine tool (10) comprises the chuck (120), which is mounted on or in the multi-axis workpiece arm (11), especially is mounted rotatably about an rotational axis (D), by which chuck (120) the workpiece holder (111) of the workpiece (14) is clampable, and **in that** the inner surface of the chuck (120) and the clamping element (109) are matched to each other such that when displacing the clamping element (109) in relation to the chuck (120) parallel to the rotational axis for clamping and releasing the workpiece holder (111) from the chuck (120) they act on each other, wherein the clamping element (109) is configured to vary a clamping force (F) applied to the workpiece holder (111) during any displacement in relation to the chuck (120).

2. The assembly according to claim 1, **characterized in that** the clamping element (109) and/or the chuck (120) have a geometry such that the clamping element (109) is configured to apply a clamping force (F) to the workpiece holder (111) when being displaced in relation to the chuck (120) in a first direction (R1) and reduce the clamping force (F) applied to the workpiece holder (111) when being displaced in relation to the chuck (120) in a second direction (R2).

3. The assembly according to claim 1 or 2, **characterized in that** the clamping element (109) is displaceable in a direction parallel to an extension direction of the surface or parallel to the rotational axis (D) to clamp the workpiece holder (111) into the chuck (120) and release the workpiece holder (111) from the chuck (120).

4. The assembly according to one of the preceding claims, **characterized in that** the chuck (120) is hollow, and **in that**, when displacing the clamping element (109) in relation to the chuck (120) in the first direction (R1), the wedge-shaped surfaces of the chuck (120) and the clamping element (109), which are arranged adjacent to each other, are in contact such that the clamping element(109) clamps the workpiece holder (111) in the chuck (120).

5. The assembly according to claim 4, **characterized In that**, when displacing the clamping element (109) in relation to the chuck (120) in the second direction (R2), the wedge-shaped surfaces of the chuck (120) and the clamping element (109), which are arranged adjacent to each other, are movable out of contact such that the clamping element (109) releases the workpiece holder (111) from the chuck (120).

6. The assembly according to one of the preceding claims, **characterized in that** the first direction (R1) is directed towards an open end (120a) of the chuck (120) and the second direction (R2) is directed towards a closed end (120b) of the chuck (120).

7. The assembly according to one of the preceding claims, **characterized in that** the clamping element (109) Is connected to or integrally formed with a clamping bolt (108) which is actuatable via a disk spring (107), the clamping chuck (120) cooperating with the clamping element (109) such that, when actuating the disk spring (107), the clamping bolt (108) moves the clamping element (109) in the direction of a housing interior (11a) of the multi-axis workpiece arm (11), thereby allowing clamping of the workpiece holder (111) in a housing (11b) of the multi-axis workpiece arm (11) to be effected.

8. The assembly according to one of the preceding claims, **characterized in that** by actuating at least one multi-axis workpiece arm (11) piston (106) mounted in a cylinder box (104) compressed air is introducible towards a spring assembly fastener (105).

9. The assembly according to claim 8, **characterized in that** introduction of the compressed air towards the spring assembly fastener (105) can cause axial displacement of the clamping bolt (108) to release the workpiece holder (111) clamped in the housing (11b) of the multi-axis workpiece arm (11).

10. The assembly according to one of the preceding claims, **characterized in that** the clamping element (109) is formed by a clamping tongue which at least sectionally bears against the chuck (120) and the workpiece holder (111), and wherein the clamping element (109) has a substantially planar surface on a side facing the workpiece holder (111).

## Revendications

1. Agencement comprenant une machine-outil (10) et un porte-pièce (111) relié à une pièce à travailler(14), où le porte-pièce (111) présente au moins une surface (111a) orientée radialement vers l'extérieur qui est conçue pour s'appuyer contre un élément de serrage (109) disposé dans la direction radiale entre le porte-pièce (111) et un mandrin (120), où une surface intérieure du mandrin (120) et l'élément de serrage (109) sont cunéiformes en section transversale au moins par sections, **caractérisé en ce que** la surface (111a) est une surface essentiellement plane, et **en ce qu'**un bras porte-pièce à plusieurs axes (11) de la machine-outil (10) présente le mandrin (120) qui est monté sur ou dans le bras porte-pièce à plusieurs axes (11), en particulier est monté de manière à pouvoir tourner autour d'un axe de rotation (D), le porte-pièce (111) de la pièce à travailler (14) pouvant être serré avec lequel mandrin (120), et **en ce que** la surface intérieure du mandrin (120) et l'élément de serrage (109) sont adaptés l'un à l'autre de telle manière qu'ils agissent l'un sur l'autre lorsque l'élément de serrage (109) est déplacé par rapport au mandrin (120) parallèlement à l'axe de rotation pour serrer et desserrer le porte-pièce (111) du mandrin (120), où l'élément de serrage (109) est conçu pour faire varier une force de serrage (F) appliquée au porte-pièce (111) lors d'un déplacement par rapport au mandrin (120).

2. Agencement selon la revendication 1, **caractérisé en ce que** l'élément de serrage (109) et/ou le mandrin (120) ont une géométrie telle que l'élément de serrage (109) est conçu pour appliquer une force de serrage (F) au porte-pièce (111) lors du déplacement par rapport au mandrin (120) dans une première direction (R1) et pour réduire la force de serrage (F) appliquée au porte-pièce (111) lors du déplacement par rapport au mandrin (120) dans une deuxième direction (R2).

3. Agencement selon la revendication 1 ou 2, **caractérisé en ce que** l'élément de serrage (109) pour serrer le porte-pièce (111) dans le mandrin (120) et pour libérer le porte-pièce (111) du mandrin (120) est déplaçable dans une direction parallèle à une direction d'extension de la surface ou parallèle à l'axe de rotation (D).

4. Agencement selon l'une des revendications précédentes, **caractérisée en ce que** le mandrin (120) est conçu creux, et **en ce que**, lors du déplacement de l'élément de serrage (109) par rapport au mandrin (120) dans la première direction (R1), les surfaces cunéiformes du mandrin (120) et de l'élément de serrage (109), qui sont disposées l'une à côté de l'autre, sont en contact de telle manière que l'élément de serrage (109) serre le porte-pièce (111) dans le mandrin (120).

5. Agencement selon la revendication 4, **caractérisé en ce que**, lors du déplacement de l'élément de serrage (109) par rapport au mandrin (120) dans la deuxième direction (R2), les surfaces cunéiformes du mandrin (120) et de l'élément de serrage (109), qui sont disposées l'une à côté de l'autre, peuvent être déplacées hors de contact de telle manière que l'élément de serrage (109) libère le porte-pièce (111) du mandrin (120).

6. Agencement selon l'une quelconque des revendications précédentes, **caractérisée en ce que** la première direction (R1) est dirigée vers une extrémité ouverte (120a) du mandrin (120) et la deuxième direction (R2) est dirigée vers une extrémité fermée (120b) du mandrin (120).

7. Agencement selon l'une des revendications précédentes, **caractérisé en ce que** l'élément de serrage (109) est relié à ou formé intégralement avec un boulon de serrage (108) pouvant être actionné par une rondelle-ressort (107), où le mandrin (120) coopère de cette manière avec l'élément de serrage (109), que lors de l'actionnement de la rondelle-ressort (107), le boulon de serrage (108) déplace l'élément de serrage (109) en direction d'un intérieur de boîtier (11a) du bras porte-pièce à plusieurs axes (11), ce qui permet de serrer le porte-pièce (111) dans un boîtier (11b) du bras porte-pièce à plusieurs axes (11).

8. Agencement selon l'une des revendications précédentes, **caractérisé en ce que** de l'air comprimé peut être Introduit contre un ressort-boulon (105) en actionnant au moins un piston (106) du bras porte-pièce à plusieurs axes (11), lequel piston est monté dans une boite cylindrique (104).

9. Agencement selon la revendication 8, **caractérisée en ce que** l'introduction de l'air comprimé contre le ressort-boulon (105) peut effectuer un déplacement axial du boulon de serrage (108) pour libérer le porte-pièce (111) serré dans le boîtier (11b) du bras porte-pièce à plusieurs axes (11).

10. Agencement selon l'une des revendications précédentes, **caractérisé en ce que** l'élément de serrage (109) est formé par une languette de serrage qui s'appuie au moins par sections contre le mandrin (120) et le porte-pièce (111), et où l'élément de serrage (109) présente une surface sensiblement plane sur un côté orienté vers le porte-pièce (111).
